# EUROPÄISCHE PATENTSCHRIFT

(11) **EP 3 060 392 B1**
(45) Veröffentlichungstag und Bekanntmachung des Hinweises auf die Patenterteilung: **27.01.2021**
(21) Anmeldenummer: 14755367.1
(22) Anmeldetag: 22.08.2014
(51) Int. Cl.: B32B 17/04, B32B 17/10

(54) **VERBUNDGLAS MIT MINDESTENS EINER CHEMISCH VORGESPANNTEN SCHEIBE**
LAMINATED GLASS WITH AT LEAST ONE CHEMICALLY TEMPERED PANE
VERRE COMPOSITE COMPRENANT AU MOINS UNE VITRE CHIMIQUEMENT PRÉCONTRAINTE

(30) Priorität: 23.10.2013 EP 13189859
(43) Veröffentlichungstag der Anmeldung: 31.08.2016
(73) Patentinhaber: SAINT-GOBAIN GLASS FRANCE, 92400 Courbevoie (FR)
(72) Erfinder: SIENERTH, Sandra, 52072 Aachen (DE); KREMERS, Stephan, 52525 Heinsberg (DE); GY, René, F-93140 Bondy (FR)
(74) Vertreter: Gebauer, Dieter Edmund
(86) Internationale Anmeldenummer: PCT/EP2014/067903
(87) Internationale Veröffentlichungsnummer: WO 2015/058885

(56) Entgegenhaltungen:
- EP-A1- 1 241 144
- EP-A2- 0 450 466
- EP-A2- 0 724 955
- WO-A1-2010/084092
- DE-A1-102006 012 552
- DE-A1-102006 042 538
- DE-U1-202010 008 729

## Beschreibung

Die Erfindung betrifft ein Verbundglas mit mindestens einer chemisch vorgespannten Scheibe und funktionellen Eigenschaften, ein Verfahren zu dessen Herstellung und die Verwendung einer Trägerschicht in einem solchen Verbundglas.

Verbundgläser sind als Verglasungen im Fahrzeugbereich hinlänglich bekannt. Sie bestehen üblicherweise aus zwei Glasscheiben mit einer Dicke von 2 mm bis 3 mm, welche mittels einer thermoplastischen Zwischenschicht miteinander verbunden sind. Solche Verbundgläser werden insbesondere als Windschutzscheiben und Dachscheiben, zunehmend aber auch als Seitenscheiben und Heckscheiben eingesetzt.

Aktuell ist die Fahrzeugindustrie bemüht, das Gewicht der Fahrzeuge zu reduzieren, was mit einem reduzierten Treibstoffverbrauch einhergeht. Einen bedeutenden Beitrag hierzu kann eine Reduzierung des Gewichts der Verglasungen leisten, was insbesondere durch verringerte Scheibendicken zu erreichen ist. Solche dünnen Scheiben weisen insbesondere Dicken kleiner als 2 mm auf. Trotz der verringerten Scheibendicken müssen jedoch die Anforderungen an Stabilität und Bruchfestigkeit der Scheiben gewährleistet sein.

Glasscheiben können zur Steigerung ihrer Stabilität mit einer Vorspannung versehen werden. Meist werden die Scheiben im Fahrzeugbereich thermisch vorgespannt, wobei die Vorspannung durch geeignetes Abkühlen der Scheiben erzeugt wird. Beim thermischen Vorpannen von Scheiben mit geringen Dicken ergeben sich jedoch aus physikalischen Gründen geringere Vorspannungen. Es sind auch chemisch vorgespannte Scheiben im Fahrzeugbereich bekannt, beispielsweise aus DE1946358A1. Üblicherweise wird hierbei durch lonenaustausch die chemische Zusammensetzung des Glases im Bereich der Oberfläche verändert. Wie beispielsweise in GB1339980A ausgeführt wird, können hierbei höhere Vorspannungen und damit eine bessere Stabilität erreicht werden als durch thermisches Vorspannen. Da der lonenaustausch durch Diffusion auf eine Oberflächenzone beschränkt ist, ist das chemische Vorspannen außerdem besonders für dünne Scheiben geeignet. Verbundgläser mit chemisch vorgespannten, dünnen Scheiben sind auch aus WO2012/051038A1 bekannt.

Moderne Verglasungen weisen häufig eine funktionelle Beschichtung auf. Beispiele für solche funktionellen Beschichtungen sind beispielsweise IR-reflektierende Beschichtungen oder beheizbare Beschichtungen. Wärmestrahlung reflektierende Beschichtungen sind beispielsweise aus EP 2 141 135 A1, WO 2010115558 A1 und WO 2011105991 A1 bekannt, beheizbare Beschichtungen beispielsweise aus WO 03/024155 A2, US 2007/0082219 A1 und US 2007/0020465 A1. Üblicherweise werden diese Beschichtungen auf eine der Glasscheiben einer Verbundscheibe aufgebracht, insbesondere durch Kathodenzerstäubung (Sputtern).

Solche, für thermisch vorgespannte oder nicht vorgespannte Scheiben bekannte Beschichtungen auf chemisch vorgespannte Scheiben zu übertragen, ist jedoch nicht einfach möglich. Die Beschichtung müsste nach dem chemischen Vorspannen aufgebracht werden, weil die Beschichtung sonst den Diffusionsprozess beim lonenaustausch stört. Aufgrund der hohen Temperaturen beim Sputtern würde jedoch durch Diffusion die definierte Vorspannung verändert werden. Außerdem würden unerwünschte thermische Spannungen in die Scheibe eingebracht werden. Aus dem gleichen Grund muss eine Scheibe beim chemischen Vorspannen bereits ihre endgültige Biegung aufweisen, da der Biegeprozess ebenfalls bei erhöhten Temperaturen stattfindet. Das Sputtern auf gebogenen Scheiben ist jedoch technisch sehr aufwendig und daher kostenintensiv.

Die DE 202010008729 U1 zeigt ein Verbundglas mit einer chemisch vorgespannten Scheibe.

Es besteht also ein Bedarf an Verbundgläsern, die chemisch vorgespannte Scheiben sowie funktionelle Beschichtungen aufweisen. Die Aufgabe der vorliegenden Erfindung besteht darin, ein solches verbessertes Verbundglas bereitzustellen.

Die Aufgabe der vorliegenden Erfindung wird erfindungsgemäß durch ein Verbundglas mit mindestens einer chemisch vorgespannten Scheibe gemäß Anspruch 1 gelöst. Bevorzugte Ausführungen gehen aus den Unteransprüchen hervor.

Das erfindungsgemäße Verbundglas mit mindestens einer chemisch vorgespannten Scheibe umfasst mindestens eine erste Scheibe und eine zweite Scheibe, welche über eine Zwischenschicht miteinander verbunden sind, wobei
- die erste Scheibe eine chemisch vorgespannte Glasscheibe mit einer Dicke von kleiner oder gleich 2,1 mm ist,
- die Zwischenschicht mindestens eine thermoplastische Verbindungsschicht und eine thermoplastische Trägerschicht enthält und
- die Trägerschicht eine funktionelle Beschichtung oder funktionelle Einlagerungen aufweist.

Das erfindungsgemäße Verbundglas ist bevorzugt dafür vorgesehen, in einer Öffnung, beispielsweise einer Fensteröffnung eines Fahrzeugs oder eines Gebäudes, den Innenraum gegenüber der äußeren Umgebung abzutrennen. Die dem Innenraum zugewandte Scheibe des Verbundglases wird dabei als Innenscheibe bezeichnet. Die der äußeren Umgebung zugewandte Scheibe wird als Außenscheibe bezeichnet.

Der Vorteil des erfindungsgemäßen Verbundglases liegt in der Trägerschicht mit der funktionellen Beschichtung oder den funktionellen Einlagerungen in der Zwischenschicht. Die Trägerschicht weist dadurch eine Funktionalität (oder funktionale Eigenschaften) auf. Durch die erfindungsgemäße Trägerschicht kann das Verbundglas daher mit einer zusätzlichen Funktionalität (oder zusätzlichen funktionalen Eigenschaften) versehen werden, ohne dass eine Beschichtung auf die erste oder die zweite Scheibe aufgebracht werden muss. Die vorstehend beschriebenen Nachteile können daher vermieden werden.

Unter einer zusätzlichen Funktionalität (oder zusätzlichen funktionalen Eigenschaften) sind im Sinne der Erfindung Eigenschaften des Verbundglases zu verstehen, die über die herkömmliche Funktion als die Durchsicht ermöglichende Fensterscheibe hinausgehen. Insbesondere ist darunter eine Wirkung (wie absorbierende, dämpfende oder reflektierende Wirkung) auf Bereiche der elektromagnetischen Strahlung zu verstehen, eine Heizfunktion, eine Antennenfunktion oder eine Splitterschutzwirkung.

Die funktionelle Beschichtung ist im gefertigten Verbundglas zwischen der Trägerschicht und einer Verbindungsschicht angeordnet. Die funktionelle Beschichtung kann prinzipiell jede, dem Fachmann bekannte funktionelle Beschichtung sein, die geeignet ist, auf eine Trägerfolie aufgebracht zu werden. Erfindungsgemäß ist die funktionelle Beschichtung eine IR-reflektierende oder absorbierende Beschichtung, eine UV-reflektierende oder absorbierende Beschichtung, eine farbgebende Beschichtung, eine Beschichtung niedriger Emissivität (sogenannte Low-E-Beschichtung), eine heizbare Beschichtung, eine Beschichtung mit Antennenfunktion, eine Beschichtung mit splitterbindender Wirkung (splitterbindende Beschichtung) oder eine Beschichtung zur Abschirmung von elektromagnetischer Strahlung, beispielsweise Radarstrahlung, sein.

Als Beschichtung niedriger Emissivität wird im Sinne der Erfindung insbesondere eine Beschichtung bezeichnet, welche das Verbundglas mit einer Emissivität von kleiner oder gleich 50 %, bevorzugt kleiner oder gleich 25% versieht. Unter Emissivität wird im Sinne der Erfindung der normale Emissionsgrad bei 283 K nach der Norm EN 12898 verstanden.

Die funktionelle Beschichtung kann vollflächig auf der Trägerfolie aufgebracht sein. Die funktionelle Beschichtung kann aber auch strukturiert auf der Trägerfolie aufgebracht sein, beispielsweise als aufgedruckte Antennenleiter oder Heizfelder.

Die funktionelle Beschichtung kann aus einer einzelnen, homogenen Schicht bestehen. Die Beschichtung kann aber auch mehrere Einzelschichten umfassen, welche flächenmäßig übereinander auf der Trägerfolie angeordnet sind.

In einer bevorzugten Ausgestaltung ist die erfindungsgemäße Beschichtung eine elektrisch leitfähige Beschichtung. Dadurch kann insbesondere eine Beschichtung niedriger Emissivität, eine IR-reflektierende oder eine beheizbare Beschichtung realisiert werden. Eine solche elektrisch leitfähige Beschichtung weist zumindest eine elektrisch leitfähige Schicht auf. Die Beschichtung kann zusätzlich dielektrische Schichten aufweisen, die beispielsweise zur Regulierung des Schichtwiderstands, zum Korrosionsschutz oder zur Verminderung der Reflexion dienen. Die leitfähige Schicht enthält bevorzugt Silber oder ein elektrisch leitfähiges Oxid (transparent conductive oxide, TCO) wie Indium-Zinn-Oxid (indium tin oxide, ITO). Die leitfähige Schicht weist bevorzugt eine Dicke von 10 nm bis 200 nm auf. Typische dielektrische Schichten enthalten Oxide oder Nitride, beispielsweise Siliziumnitrid, Siliziumoxid, Aluminiumnitrid, Aluminiumoxid, Zinkoxid oder Titanoxid. Die elektrische Leitfähigkeit der Beschichtung hängt von der Verwendung im Einzelfall ab und kann vom Fachmann entsprechend gewählt und eingestellt werden. Der spezifische Widerstand beträgt bevorzugt kleiner als 5 Ωm, beispielsweise etwa 3 Ωm für IR-reflektierende Beschichtungen. Für effektive beheizbare Beschichtungen beträgt der spezifische Widerstand bevorzugt kleiner als 1 Ωm, besonders bevorzugt kleiner als 0,7 Ωm, ganz besonders bevorzugt kleiner als 0,5 Ωm.

Alternativ zur funktionellen Beschichtung kann die Trägerfolie auch mit funktionellen Einlagerungen versehen sein. Die funktionellen Einlagerungen weisen IR-absorbierende, UV-absorbierende oder farbgebende Eigenschaften auf. Die funktionellen Einlagerungen können insbesondere organische oder anorganische Ionen, Verbindungen, Aggregate, Moleküle, Kristalle (beispielsweise Nanokristalle), Pigmente oder Farbstoffe sein.

Die Trägerschicht ist bevorzugt durch eine thermoplastische Folie ausgebildet. Die thermoplastische Folie wird mit der funktionellen Beschichtung oder den funktionellen Einlagerungen bereitgestellt und zur Herstellung des Verbundglases zwischen der ersten und der zweiten Scheibe angeordnet und durch Lamination in der Zwischenschicht eingelagert. Die thermoplastische Folie kann eine monolithische Kunststoff-Folie sein oder aus mehreren Einzelschichten bestehen (Folien-Sandwich).

Die Trägerschicht enthält bevorzugt zumindest Polyethylenterephthalat (PET), Polyethylen (PE) oder Gemische oder Copolymere oder Derivate davon. Das ist besonders vorteilhaft für die Handhabung die Stabilität und die optische Eigenschaften der Trägerschicht.

Die Trägerschicht weist bevorzugt eine Dicke von 5 µm bis 1 mm auf, besonders bevorzugt von 5 µm bis 500 µm, ganz besonders bevorzugt von 10 µm bis 200 µm und insbesondere von 12 µm bis 75 µm. Trägerschichten mit diesen Dicken lassen sich vorteilhaft in Form von flexiblen und gleichzeitig stabilen Folien bereitstellen, dies sich gut handhaben lassen.

Die Zwischenschicht enthält außer der Trägerschicht mindestens eine thermoplastische Verbindungsschicht. Die Verbindungsschicht bewirkt die dauerhaft stabile Verklebung der ersten Scheibe und der zweiten Scheibe. Die Verbindungsschicht ist bevorzugt durch eine thermoplastische Folie ausgebildet. Die Verbindungsschicht enthält bevorzugt zumindest Polyvinylbutyral (PVB), Ethylenvinylacetat (EVA), Polyurethan (PU) oder Gemische oder Copolymere oder Derivate davon. Die Verbindungsschicht weist bevorzugt eine Dicke von 0,2 mm bis 1 mm, besonders bevorzugt von 0,3 mm bis 0,9 mm auf, beispielsweise 0,38 mm, 0,76 mm oder 0,86 mm. Das ist vorteilhaft im Hinblick auf die Bruchstabilität und eine geringe Gesamtdicke des Verbundglases.

Die Trägerschicht ist in einer Ausgestaltung der Erfindung mit einer adhäsiven Schicht eines Klebstoffs, beispielsweise Silikonklebstoffs, versehen und mittels dieses Klebstoffs an der ersten Scheibe oder der zweiten Scheibe angebracht. In einer alternativen Ausgestaltung ist die Trägerschicht zwischen einer ersten und einer zweiten thermoplastischen Verbindungsschicht angeordnet.

Die Trägerschicht kann die gleiche Fläche wie das Verbundglas aufweisen und sich bis zu den Seitenkanten des Verbundglases erstrecken. Die Trägerschicht kann aber auch eine kleinere Fläche als das Verbundglas aufweisen, so dass ein umlaufender Randbereich mit einer Breite von bevorzugt 5 mm bis 20 mm nicht mit der Trägerschicht versehen ist. Die Trägerschicht ist dadurch innerhalb der Zwischenschicht vor Kontakt mit der umgebenden Atmosphäre geschützt, was besonders für korrosionsempfindliche funktionelle Beschichtungen vorteilhaft ist.

Ein umlaufender Randbereich einer der Scheiben des Verbundglases, insbesondere der Außenscheibe, kann mit einem opaken Abdeckdruck, bevorzugt Siebdruck versehen sein. Solche Siebdrucke treten insbesondere im Fahrzeugbereich auf, wodurch ein Klebstoff, mit welchem das Verbundglas mit der Fahrzeugkarosserie verbunden ist, vor UV-Strahlung geschützt wird. Sie kann auch aus ästhetischen Gründen gewünscht sein, beispielsweise um die Seitenkante der Trägerschicht oder gegebenenfalls elektrische Anschlüsse der funktionellen Beschichtung vor den Blicken eines Betrachters des Verbundglases zu verbergen.

Die erste Scheibe kann grundsätzlich jede dem Fachmann bekannte chemische Zusammensetzung aufweisen. Die erste Scheibe kann beispielweise Kalk-Natron-Glas oder Borsilikatglas enthalten oder aus diesen Gläsern bestehen. Die erste Scheibe muss sich natürlich dazu eignen, chemisch vorgespannt zu werden, und insbesondere einen dazu geeigneten Anteil an Alkalielementen, bevorzugt Natrium aufweisen. Die erste Scheibe kann beispielsweise von 40 Gew-% bis 90 Gew-% Siliziumoxid (SiO₂), von 0,5 Gew-% bis 10 Gew-% Aluminiumoxid (Al₂O₃), von 1 Gew-% bis 20 Gew-% Natriumoxid (Na₂O), von 0,1 Gew-% bis 15 Gew-% Kaliumoxid (K₂O), von 0 Gew-% bis 10 Gew-% Magnesiumoxid (MgO), von 0 Gew-% bis 10 Gew-% Kalziumoxid (CaO) und von 0 Gew-% bis 15 Gew-% Boroxid (B₂O₃) enthalten. Die erste Scheibe kann außerdem weitere Bestandteile und Verunreinigungen enthalten.

Es hat sich jedoch überraschend gezeigt, dass bestimmte chemische Zusammensetzungen der ersten Scheibe besonders dazu geeignet sind, einem chemischen Vorspannen unterzogen zu werden. Dies äußert sich in einer hohen Geschwindigkeit des Diffusionsprozesses, was zu einem vorteilhaft geringen Zeitaufwand für den Vorspannprozess führt, und großen Vorspanntiefen (Druckspannungstiefen), was zu stabilen und bruchfesten Gläsern führt. Diese Zusammensetzungen sind im Sinne der Erfindung bevorzugt.

Die erste Scheibe enthält vorteilhafterweise ein Aluminosilikatglas. Die erste Scheibe enthält bevorzugt von 50 Gew-% bis 85 Gew-% Siliziumoxid (SiO₂), von 3 Gew-% bis 10 Gew-% Aluminiumoxid (Al₂O₃), von 8 Gew-% bis 18 Gew-% Natriumoxid (Na₂O), von 5 Gew-% bis 15 Gew-% Kaliumoxid (K₂O), von 4 Gew-% bis 14 Gew-% Magnesiumoxid (MgO), von 0 Gew-% bis 10 Gew-% Kalziumoxid (CaO) und von 0 Gew-% bis 15 Gew-% Boroxid (B₂O₃). Die erste Scheibe kann außerdem weitere Bestandteile und Verunreinigungen enthalten.

Die erste Scheibe enthält besonders bevorzugt zumindest von 55 Gew-% bis 72 Gew-% Siliziumoxid (SiO₂), von 5 Gew-% bis 10 Gew-% Aluminiumoxid (Al₂O₃), von 10 Gew-% bis 15 Gew-% Natriumoxid (Na₂O), von 7 Gew-% bis 12 Gew-% Kaliumoxid (K₂O) und von 6 Gew-% bis 11 Gew-% Magnesiumoxid (MgO). Die erste Scheibe kann außerdem weitere Bestandteile und Verunreinigungen enthalten.

Die erste Scheibe enthält ganz besonders bevorzugt zumindest von 57 Gew-% bis 65 Gew-% Siliziumoxid (SiO₂), von 7 Gew-% bis 9 Gew-% Aluminiumoxid (Al₂O₃), von 12 Gew-% bis 14 Gew-% Natriumoxid (Na₂O), von 8,5 Gew-% bis 10,5 Gew-% Kaliumoxid (K₂O) und von 7,5 Gew-% bis 9,5 Gew-% Magnesiumoxid (MgO). Die erste Scheibe kann außerdem weitere Bestandteile und Verunreinigungen enthalten.

Es hat sich zudem überraschend ein weiterer Vorteil von Scheiben mit den bevorzugten Zusammensetzungen gezeigt. Solche Scheiben sind dazu geeignet, zusammen mit Scheiben aus herkömmlichem Kalk-Natron-Glas (auch Normalglas genannt) kongruent gebogen zu werden. Hierfür sind ähnliche thermische Eigenschaften verantwortlich, so dass die beiden Glasarten im gleichen Temperaturbereich biegbar werden, nämlich etwa von 450 °C bis 700 °C. Wie dem Fachmann hinreichend bekannt ist, eignen sich kongruent gebogene Scheiben aufgrund ihrer optimal aufeinander angepassten Form in besonderer Weise dazu, zu einem Verbundglas verbunden zu werden. Eine erste Scheibe mit den bevorzugten chemischen Zusammensetzungen ist also besonders geeignet, in einem Verbundglas mit einer zweiten Scheibe anderer Zusammensetzung, insbesondere aus Kalk-Natron-Glas, verwendet zu werden.

Die Stabilität der ersten Scheibe kann durch geeignete Werte und lokale Verteilungen der Spannungen, welche durch die Einlagerung von Ionen beim chemischen Vorspannen erzeugt werden, verbessert werden.

In einer vorteilhaften Ausgestaltung weist die erste Scheibe eine Oberflächendruckspannung von größer als 100 MPa, bevorzugt größer als 250 MPa und besonders bevorzugt größer 350 MPa auf.

Die Druckspannungstiefe der ersten Scheibe beträgt bevorzugt größer als 40 µm, besonders bevorzugt größer als 100 µm, ganz besonders bevorzugt zwischen 100 µm und 150 µm. Das ist vorteilhaft im Hinblick auf die Bruchfestigkeit der Scheibe einerseits und einen wenig zeitintensiven Vorspannprozess andererseits. Die Druckspannungstiefe der ersten Scheibe beträgt insbesondere mindestens ein Zehntel der Dicke der ersten Scheibe, bevorzugt mindestens ein Sechstel der Dicke der ersten Scheibe, beispielsweise etwa ein Fünftel der Dicke der ersten Scheibe. Mit Druckspannungstiefe wird im Sinne der Erfindung die Tiefe gemessen von der Oberfläche der Scheibe bezeichnet, bis zu der die Scheibe unter Druckspannungen mit einem Betrag größer 0 MPa steht.

Die Dicke der ersten Scheibe beträgt bevorzugt von 0,3 mm bis 2,1 mm, besonders bevorzugt von 0,5 mm bis 2,1 mm, ganz besonders bevorzugt von 0,5 bis 1,5 mm und insbesondere von 0,6 mm bis 1,0 mm, beispielsweise etwa 0,7 mm. Der Vorteil liegt in einer besonderen Stabilität und in einem geringen Gewicht des Verbundglases. Das chemische Vorspannen ist besonders für Scheiben mit solchen geringen Dicken interessant.

In einer Ausgestaltung der Erfindung enthält die zweite Scheibe ebenfalls Glas und ist ebenfalls chemisch vorgespannt. So können Verbundgläser mit besonders geringen Dicken und besonders hohen Vorspannungswerten erreicht werden. Die Dicke der chemisch vorgespannten Scheibe als zweite Scheibe beträgt bevorzugt von 0,3 mm bis 2,1 mm, besonders bevorzugt von 0,5 mm bis 2,1 mm, ganz besonders bevorzugt von 0,5 bis 1,5 mm und insbesondere von 0,6 mm bis 1,0 mm, beispielsweise etwa 0,7 mm. Bevorzugte chemische Zusammensetzungen für die zweite Scheibe entsprechen den vorstehend im Zusammenhang mit der ersten Scheibe beschriebenen Zusammensetzungen. Bevorzugt weisen die erste und die zweite Scheibe die gleiche chemische Zusammensetzung auf, was besonders vorteilhaft im Hinblick auf eine einfache und kostengünstige Herstellung des Verbundglases ist.

In einer weiteren Ausgestaltung der Erfindung enthält die zweite Scheibe Glas, bevorzugt Kalk-Natron-Glas oder Borsilikatglas, und ist nicht vorgespannt. Zur Verbesserung der Stabilität ist die zweite Scheibe in dieser Ausgestaltung bevorzugt dicker als die erste Scheibe. Die Dicke der zweiten Scheibe beträgt bevorzugt von 1,5 mm bis 5 mm, besonders bevorzugt von 2 mm bis 3 mm, beispielsweise 2,1 mm oder 2,6 mm. In einer Ausführung ist die erste Scheibe die Innenscheibe des Verbundglases und die zweite Scheibe die Außenscheibe. Das ist besonders vorteilhaft im Hinblick auf die Steinschlagfestigkeit der Scheibe gegenüber einem spitzen Stein. In einer alternativen Ausführung ist die erste Scheibe die Außenscheibe des Verbundglases und die zweite Scheibe die Innenscheibe. Das ist besonders vorteilhaft im Hinblick auf die Kratzfestigkeit der Scheibe.

In einer weiteren Ausgestaltung ist die zweite Scheibe eine Kunststoffscheibe, welche bevorzugt zumindest Polycarbonat (PC), Polymethylmethacrylat (PMMA) oder Gemische oder Copolymere oder Gemische davon enthält. Die Dicke der Kunststoffscheibe als zweite Scheibe beträgt bevorzugt von 1,5 mm bis 5 mm, besonders bevorzugt von 2 mm bis 3 mm. Durch eine Kunststoffscheibe kann trotz größerer Dicke vorteilhaft ein geringes Gewicht des Verbundglases erreicht werden. Auch hier kann die erste Scheibe die Innenscheibe oder auch die Außenscheiben sein, wobei aus Gründen der Kratzfestigkeit die erste Scheibe als Außenscheibe bevorzugt sein kann.

Die erste Scheibe, die zweite Scheibe, die Trägerschicht und/oder die Verbindungsschicht können klar und farblos, aber auch getönt oder gefärbt sein. Beispielsweise können die Trägerschicht oder die Verbindungsschicht organische oder anorganische Pigmente, Farbstoffe oder Tinten enthalten.

Das erfindungsgemäße Verbundglas kann plan sein. Plane Verbundgläser treten insbesondere im Architekturbereich auf sowie bei großflächigen Verglasungen von Bussen, Zügen oder Traktoren. Das erfindungsgemäße Verbundglas kann aber auch leicht oder stark in einer oder in mehreren Richtungen des Raumes gebogen sein. Gebogene Scheiben treten beispielsweise bei Verglasungen im Kraftfahrzeugbereich auf, wobei typische Krümmungsradien im Bereich von etwa 10 cm bis etwa 40 m liegen.

Die Erfindung umfasst weiter ein Verfahren zur Herstellung eines oben beschriebenen Verbundglases mit mindestens einer chemisch vorgespannten Scheibe, wobei
(a) eine erste Scheibe aus Glas mit einer Dicke von kleiner oder gleich 2,1 mm chemisch vorgespannt wird,
(b) eine mit mindestens einer funktionellen Beschichtung oder funktionellen Einlagerungen versehene thermoplastische Trägerschicht und eine Verbindungsschicht flächenmäßig zwischen der ersten Scheibe und einer zweiten Scheibe angeordnet werden und
(c) die erste Scheibe und die zweite Scheibe durch Lamination miteinander verbunden werden, wobei zumindest die Trägerschicht und die Verbindungsschicht eine Zwischenschicht bilden.

Die Scheibe wird bevorzugt als Flachglas im Float-Prozess hergestellt und auf die gewünschte Größe und Form zurechtgeschnitten.

Die erste Scheibe erhält bevorzugt noch vor dem chemischen Vorspannen ihre endgültige dreidimensionale Form. Dafür wird die erste Scheibe einem Biegeprozess bei erhöhten Temperaturen unterzogen, beispielsweise bei 500°C bis 700°C. Bevorzugt werden die erste Scheibe und die zweite Scheibe gemeinsam (d.h. zeitgleich und durch dasselbe Werkzeug) kongruent gebogen, weil dadurch die Form der Scheiben für die später erfolgende Laminierung optimal aufeinander abgestimmt sind.

Nach dem Biegen wird die Scheibe langsam abgekühlt. Ein zu schnelles Abkühlen erzeugt thermische Spannungen in der Scheibe, die beim späteren chemischen Tempern zu Formänderungen führen können. Die Abkühlrate beträgt bevorzugt bis zur Abkühlung auf eine Temperatur von 400 °C bevorzugt von 0,05 °C/sec bis 0,5 °C/sec, besonders bevorzugt von 0,1-0,3°C/sec. Durch ein derartig langsames Abkühlen können thermische Spannungen im Glas vermieden werden, welche insbesondere zu optischen Mängeln führen sowie zu einer negativen Beeinträchtigung der späteren chemischen Vorspannung. Es kann danach weiter abgekühlt werden, auch mit höheren Abkühlraten, weil unterhalb 400 °C die Gefahr der Erzeugung von thermischen Spannungen gering ist.

Das chemische Vorspannen erfolgt bevorzugt bei einer Temperatur von 300 °C bis 600 °C, besonders bevorzugt von 400 °C bis 500 °C. Die erste Scheibe wird dabei mit einer Salzschmelze behandelt, beispielsweise in die Salzschmelze eingetaucht. Während der Behandlung werden insbesondere Natrium-Ionen des Glases durch größere Ionen, insbesondere größere Alkali-Ionen ausgetauscht, wobei die gewünschten Oberflächen-Druckspannungen entstehen. Die Salzschmelze ist bevorzugt die Schmelze eines Kaliumsalzes, besonders bevorzugt Kaliumnitrat (KNO₃) oder Kaliumsulfat (KSO₄), ganz besonders bevorzugt Kaliumnitrat (KNO₃).

Der lonenaustauch wird durch die Diffusion der Alkali-Ionen bestimmt. Die gewünschten Werte für die Oberflächen-Druckspannungen und Druckspannungstiefen können daher insbesondere durch die Temperatur und die Dauer des Vorspannprozesses eingestellt werden. Übliche Zeiten für die Dauer betragen von 2 Stunden bis 48 Stunden.

Nach der Behandlung mit der Salzschmelze wird die Scheibe auf Raumtemperatur abgekühlt. Anschließend wird die Scheibe gereinigt, bevorzugt mit Schwefelsäure (H₂SO₄).

Die Trägerschicht und die Verbindungsschicht werden bevorzugt als Folien bereitgestellt.

Die Folie, welche die Trägerschicht ausbildet, kann beispielsweise mit der Schicht eines Klebstoffs versehen sein und auf die erste Scheibe oder die zweite Scheibe aufgeklebt werden. Dann wird die Folie, welche die Verbindungschicht ausbildet, auf der Trägerschicht angeordnet und die zweite Scheibe auf der Verbindungsschicht angeordnet.

Die Folie, welche die Trägerschicht ausbildet, kann auch beispielsweise zwischen zwei thermoplastische Verbindungsschichten eingelegt werden.

Natürlich kann die Zwischenschicht auch weitere Schichten umfassen, die in den Verbund vor dem Laminieren eingelegt werden.

Die Herstellung des Verbundglases durch Lamination erfolgt mit üblichen, dem Fachmann an sich bekannten Methoden, beispielsweise Autoklavverfahren, Vakuumsackverfahren, Vakuumringverfahren, Kalanderverfahren, Vakuumlaminatoren oder Kombinationen davon. Die Verbindung von erster Scheibe und zweiter Scheibe erfolgt dabei üblicherweise unter Einwirkung von Hitze, Vakuum und / oder Druck.

Das erfindungsgemäße Verbundglas mit mindestens einer chemisch vorgespannten Scheibe wird bevorzugt in Gebäuden, insbesondere im Zugangs- oder Fensterbereich, als Einbauteil in Möbeln und Geräten, oder in Fortbewegungsmitteln für den Verkehr auf dem Lande, in der Luft oder zu Wasser verwendet, insbesondere in Zügen, Schiffen und Kraftfahrzeugen beispielsweise als Windschutzscheibe, Dachscheibe, Heckscheibe oder Seitenscheibe.

Die Erfindung umfasst weiter die Verwendung einer mit einer funktionellen Beschichtung oder funktionellen Einlagerung versehenen thermoplastischen Trägerfolie in der Zwischenschicht eines erfindungsgemäßen Verbundglases mit mindestens einer chemisch vorgespannten Scheibe, um das Verbundglas mit funktionellen Eigenschaften zu versehen. Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: einen Querschnitt durch eine Ausgestaltung des erfindungsgemäßen Verbundglases,
- Fig. 2: einen Querschnitt durch eine weitere Ausgestaltung des erfindungsgemäßen Verbundglases und
- Fig. 3: ein Flussdiagramm einer Ausführungsform des erfindungsgemäßen Verfahrens.

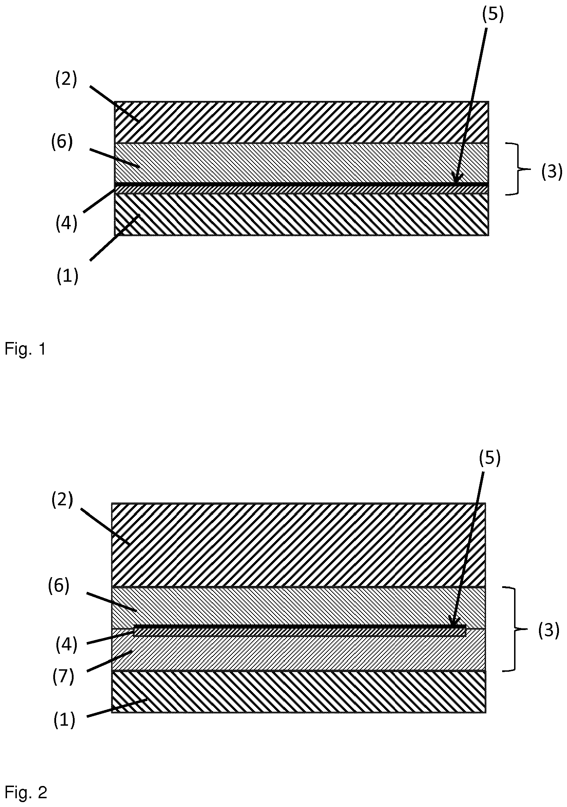

Fig. 1 zeigt ein erfindungsgemäßes Verbundglas, welches aus einer ersten Scheibe 1 und einer zweiten Scheibe 2 besteht, die über eine Zwischenschicht 3 miteinander verbunden sind. Das Verbundglas ist als Dachscheibe eines Kraftfahrzeugs vorgesehen, wobei die erste Scheibe 1 in Einbaulage die Innenscheibe ist und die zweite Scheibe 2 die Außenscheibe.

Die erste Scheibe 1 und die zweite Scheibe 2 bestehen aus chemisch vorgespanntem Glas und weisen eine Dicke von jeweils lediglich 0,7 mm auf. Die Oberflächen-Druckspannung der Scheiben 1, 2 beträgt etwa 400 MPa und die Druckspannungstiefe etwa 150 µm. Aufgrund der chemischen Vorspannung sind die Scheiben 1, 2 trotz ihrer geringen Dicke hinreichend stabil. Die chemische Zusammensetzung der Scheiben 1, 2 ist in Tabelle 1 dargestellt, wobei der fehlende Anteil durch Beimengungen und Verunreinigungen hervorgerufen wird. Die Zusammensetzung eignet sich besonders dafür, mit einer chemischen Vorspannung beaufschlagt zu werden.

**Tabelle 1**

| **Bestandteil** | **Gew.-%** |
|---|---|
| SiO₂ | 60,7 |
| Al₂O₃ | 7,7 |
| Na₂O | 13,1 |
| K₂O | 9,6 |
| MgO | 8,4 |

Durch die geringe Dicke der Scheiben 1, 2, welche deutlich kleiner ist als die übliche Standard-Glasstärken von etwa 2,1 mm oder 2,6 mm, weist das Verbundglas ein erheblich geringeres Gewicht auf als herkömmliche Verbundgläser. Die chemisch vorgespannten Scheiben 1, 2 können jedoch nicht einfach beispielsweise durch Sputtern mit einer funktionellen Beschichtung versehen werden, wie es für nicht vorgespannte und thermisch vorgespannte Scheiben üblich ist.

Die Zwischenschicht 3 umfasst eine thermoplastische Verbindungsschicht 6 und eine thermoplastische Trägerschicht 4, welche mit einer funktionellen Beschichtung 5 versehen ist. Die Verbindungsschicht besteht aus PVB und weist eine Dicke von 0,76 mm auf. Die Trägerschicht 4 besteht aus PET und weist eine Dicke von 50 µm auf. Die funktionelle Beschichtung 5 ist eine Beschichtung niedriger Emissivität (Low-E-Beschichtung). Die funktionelle Beschichtung 5 enthält eine elektrisch leitfähige Schicht, welche aus ITO besteht und eine Dicke von etwa 100 nm aufweist. Durch die Trägerschicht 4 wird das Verbundglas mit der Low-E- Funktion versehen, ohne das eine der Scheiben 1, 2 beschichtet werden müssen.

Die Trägerschicht 4 und die Verbindungsschicht 6 wurden bei der Herstellung des Verbundglases als Folie bereitgestellt. Die Trägerschicht 4 ist über einen nicht dargestellten Klebstoff mit der ersten Scheibe 1 verbunden. Die Beschichtung 5 ist auf der von der ersten Scheibe 1 abgewandten Oberfläche der Trägerschicht 4 angeordnet. Die Verbindungsschicht 6 bewirkt die dauerhaft stabile Verbindung zwischen der zweiten Scheibe 2 und der ersten Scheibe 1 mit der Trägerfolie 4.

Alternativ zu der Beschichtung 5 ist es auch denkbar, die Trägerschicht 4 durch funktionelle Einlagerungen beispielsweise mit IR-reflektierenden Eigenschaften zu versehen.

Fig. 2 zeigt eine weitere Ausgestaltung des erfindungsgemäßen Verbundglases. Die chemisch vorgespannte erste Scheibe 1 ist wie in Figur 1 ausgestaltet, mit einer Dicke von 0,7 mm und der Zusammensetzung aus Tabelle 1.

Die zweite Scheibe 2, welche die Außenscheibe ist, ist im Unterschied zur Ausgestaltung aus Figur 1 keine chemisch vorgespannte dünne Scheibe, sondern eine nicht vorgespannte Scheibe aus Kalk-Natron-Glas mit der Standard-Dicke von 2,1 mm. Es ist ein besonderer Vorteil der ersten Scheibe 1 mit der chemischen Zusammensetzung aus Tabelle 1, dass sie zusammen mit einer Scheibe aus Kalk-Natron-Glas einem Biegeprozess unterzogen werden kann, was im Sinne einer einfachen und kostengünstigen Herstellung des Verbundglases vorteilhaft ist.

Die Zwischenschicht enthält die Trägerschicht 4 mit der funktionellen Beschichtung 5. Die Trägerschicht 4 ist im Unterschied zur Figur 1 nicht direkt auf der ersten Scheibe 1 angeordnet, sondern zwischen einer ersten thermoplastischen Verbindungsschicht 6 und einer zweiten thermoplastischen Verbindungsschicht 7 angeordnet. Die Verbindungsschichten 6, 7 sind jeweils aus einer 0,76 mm dicken PVB-Folie ausgebildet.

Die Trägerschicht 4 weist einen Rückschnitt bezogen auf die Fläche des Verbundglases auf. Das bedeutet, dass sich die Trägerschicht 4 nicht bis zur Seitenkante des Verbundglases erstreckt, sondern einen umlaufenden Abstand zur Seitenkante von beispielsweise 10 mm aufweist. Die Trägerschicht 4 ist dadurch durch die Verbindungsschichten 6, 7 vor Korrosion geschützt, welche die gleiche Fläche aufweisen wie die Scheiben 1, 2 und im Randbereich direkt miteinander verklebt sind.

Bei einem unsymmetrischen Aufbau des Verbundglases wie in Figur 2 ist es gleichermaßen möglich, dass die chemisch vorgespannte erste Scheibe 1 die Außenscheibe bildet. Ebenso ist es möglich, die chemisch vorgespannte erste Scheibe 1 mit einer zweiten Scheibe 2 aus Kunststoff zu kombinieren.

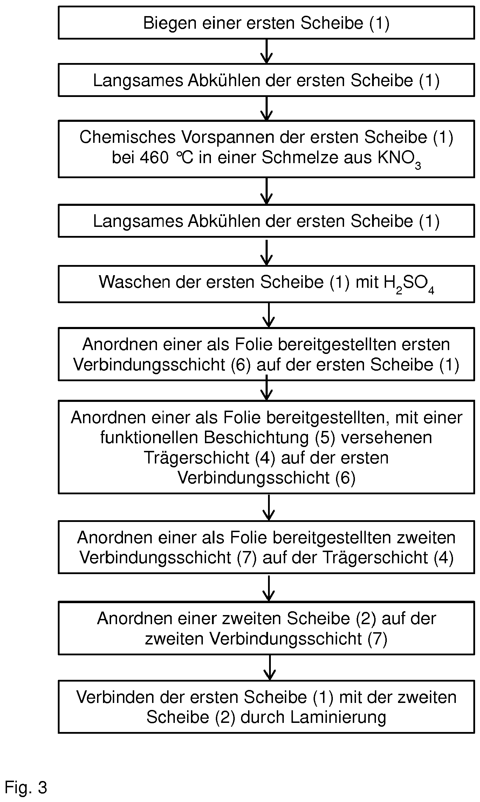

Fig. 3 zeigt ein Flussdiagramm eines Ausführungsbeispiels des erfindungsgemäßen Verfahrens zur Herstellung eines erfindungsgemäßen Verbundglases. Eine erste Scheibe 1 wird als planes Floatglas mit der chemischen Zusammensetzung aus Tabelle 1 bereitgestellt. Die erste Scheibe 1 wird zunächst durch einen Biegeprozess in ihre endgültige dreidimensionale Form gebracht. Bevorzugt wird eine zweite Scheibe 2, welche zur Verbindung mit der ersten Scheibe 1 vorgesehen ist, zusammen mit der ersten Scheibe 1 kongruent gebogen. Es ist ein besonderer Vorteil der Scheibe 1 mit der angegebenen Zusammensetzung, dass sie auch dann zusammen mit der zweiten Scheibe 2 gebogen werden kann, wenn die zweite Scheibe 2 nicht die gleiche Zusammensetzung aufweist, sondern beispielsweise aus herkömmlichem Kalk-Natron-Glas besteht.

Die erste Scheibe 1 wird nach dem Biegen langsam abgekühlt, um thermische Spannungen zu vermeiden. Eine geeignete Abkühlrate beträgt beispielsweise 0,1 °C/sec. Die erste Scheibe 1 wird anschließend für einen Zeitraum von einigen Stunden, beispielsweise 4 Stunden, bei einer Temperatur von 460 °C mit einer Schmelze aus Kaliumnitrat behandelt und dabei chemisch vorgespannt. Die Behandlung bewirkt einen diffusionsgetriebenen Austausch von Natriumionen durch größere Kaliumionen über die Oberflächen des Glases. Dadurch werden Oberflächendruckspannungen erzeugt. Die erste Scheibe 1 wird anschließend abgekühlt und dann mit Schwefelsäure gewaschen, um Rückstände des Kaliumnitrats zu entfernen.

Eine erste thermoplastische Folie aus PVB, welche im Verbundglas eine erste Verbindungsschicht 6 ausbildet, wird auf diejenige Oberfläche der ersten Scheibe 1 aufgelegt, welche dafür vorgesehen ist, im Verbundglas der zweiten Scheibe 2 zugewandt zu sein. Anschließend wird eine Folie, welche mit einer funktionellen Beschichtung 5 versehen ist, auf die erste Verbindungsschicht 6 aufgelegt. Durch die Folie wird im Verbundglas eine Trägerschicht 4 ausgebildet.

Auf die Trägerschicht 4 wird eine zweite thermoplastische Folie aus PVB aufgelegt, welche im Verbundglas eine zweite Verbindungsschicht 7 ausbildet. Auf die Verbindungsschicht 7 wird die zweite Scheibe 2 angeordnet. Anschließend wird der Scheibenverbund auf herkömmliche Weise laminiert, beispielsweise durch ein Vakuumsack-Verfahren.

Die Trägerfolie 4 kann alternativ, statt zwischen eine erste Verbindungsschicht und eine zweite Verbindungsschicht eingelegt zu werden, auf einer Scheibenoberfläche angeklebt werden. Dazu wird die Folie bevorzugt vorgefertigt mit einer Klebstoffschicht auf der von der funktionellen Beschichtung abgewandten Oberfläche bereitgestellt.

### Bezugszeichenliste:

- (1): erste Scheibe
- (2): zweite Scheibe
- (3): Zwischenschicht
- (4): Trägerschicht
- (5): funktionelle Beschichtung
- (6): Verbindungsschicht
- (7): zweite Verbindungsschicht

## Patentansprüche

1. Verbundglas mit mindestens einer chemisch vorgespannten Scheibe, mindestens umfassend eine erste Scheibe (1) und eine zweite Scheibe (2), welche über eine Zwischenschicht (3) miteinander verbunden sind, wobei
- die erste Scheibe (1) eine chemisch vorgespannte Glasscheibe mit einer Dicke von kleiner oder gleich 2,1 mm ist,
- die Zwischenschicht (3) mindestens eine thermoplastische Verbindungsschicht (6) und eine thermoplastische Trägerschicht (4) enthält und
- die Trägerschicht (4) eine funktionelle Beschichtung (5) oder funktionelle Einlagerungen aufweist, wobei
die Trägerschicht (4) mit der funktionellen Beschichtung (5) oder den funktionellen Einlagerungen in der Zwischenschicht (3) angeordnet ist, und wobei
(i) die Trägerschicht (4) eine funktionelle Beschichtung (5) aufweist, die eine IR-reflektierende oder absorbierende Beschichtung, eine UV-reflektierende oder absorbierende Beschichtung, eine farbgebende Beschichtung, eine Beschichtung niedriger Emissivität, eine heizbare Beschichtung, eine Beschichtung mit Antennenfunktion, eine splitterbindende Beschichtung oder eine Beschichtung zur Abschirmung von elektromagnetischer Strahlung ist, oder
(ii) wobei die Trägerschicht (4) funktionelle Einlagerungen mit IR-absorbierenden, UVabsorbierenden oder farbgebenden Eigenschaften aufweist, bevorzugt organische oder anorganische Ionen, Verbindungen, Aggregate, Moleküle, Kristalle, Pigmente oder Farbstoffe.

2. Verbundglas nach Anspruch 1, Alternative (i), wobei die funktionelle Beschichtung (5) mindestens eine elektrisch leitfähige Schicht enthält, welche bevorzugt zumindest Silber oder ein transparentes leitfähiges Oxid enthält und bevorzugt eine Dicke von 10 nm bis 200 nm aufweist.

3. Verbundglas nach einem der Ansprüche 1 bis 2, wobei die Trägerschicht (4) eine Dicke von 5 µm bis 1 mm aufweist, bevorzugt von 5 µm bis 500 µm besonders bevorzugt von 10 µm bis 200 µm, ganz besonders bevorzugt von 12 µm bis 75 µm.

4. Verbundglas nach einem der Ansprüche 1 bis 3, wobei die Trägerschicht (4) zumindest Polyethylenterephthalat (PET), Polyethylen (PE) oder Gemische oder Copolymere oder Derivate davon enthält.

5. Verbundglas nach einem der Ansprüche 1 bis 4, wobei die Verbindungsschicht (6) zumindest Polyvinylbutyral (PVB), Ethylenvinylacetat (EVA), Polyurethan (PU) oder Gemische oder Copolymere oder Derivate davon enthält und eine Dicke von 0,2 mm bis 1 mm aufweist.

6. Verbundglas nach einem der Ansprüche 1 bis 5, wobei die erste Scheibe (1) von 55 Gew-% bis 72 Gew-% Siliziumoxid (SiO₂), von 5 Gew-% bis 10 Gew-% Aluminiumoxid (Al₂O₃), von 10 Gew-% bis 15 Gew-% Natriumoxid (Na₂O), von 7 Gew-% bis 12 Gew-% Kaliumoxid (K₂O) und von 6 Gew-% bis 11 Gew-% Magnesiumoxid (MgO) enthält.

7. Verbundglas nach einem der Ansprüche 1 bis 6, wobei die erste Scheibe (1) eine Oberflächendruckspannung von größer als 100 MPa, bevorzugt größer als 250 MPa und besonders bevorzugt größer 350 MPa aufweist und eine Druckspannungstiefe von größer als 40 µm, bevorzugt größer als 100 µm, besonders bevorzugt größer als 150 µm.

8. Verbundglas nach einem der Ansprüche 1 bis 7, wobei die erste Scheibe (1) eine Dicke von 0,3 mm bis 2,1 mm, bevorzugt von 0,5 bis 1,5 mm, besonders bevorzugt von 0,6 mm bis 1,0 mm aufweist.

9. Verbundglas nach einem der Ansprüche 1 bis 8, wobei die zweite Scheibe (2) eine chemisch vorgespannte Glasscheibe ist und eine Dicke von 0,3 mm bis 2,1 mm, bevorzugt von 0,5 bis 1,5 mm aufweist.

10. Verbundglas nach einem der Ansprüche 1 bis 9, die zweite Scheibe eine nicht vorgespannte Glasscheibe oder Kunststoffscheibe ist und eine Dicke 1,5 mm bis 5 mm, bevorzugt von 2 mm bis 3 mm aufweist.

11. Verfahren zur Herstellung eines Verbundglases mit mindestens einer chemisch vorgespannten Scheibe nach einem der Ansprüche 1 bis 10, wobei
(a) eine erste Scheibe (1) aus Glas chemisch vorgespannt wird,
(b) eine mit mindestens einer funktionellen Beschichtung (5) oder funktionellen Einlagerungen versehene thermoplastische Trägerschicht (4) und eine Verbindungsschicht (6) flächenmäßig zwischen der ersten Scheibe (1) und einer zweiten Scheibe (2) angeordnet werden und
(c) die erste Scheibe (1) und die zweite Scheibe (2) durch Lamination miteinander verbunden werden, wobei zumindest die Trägerschicht (4) und die Verbindungsschicht (6) eine Zwischenschicht (3) ausbilden.

12. Verfahren nach Anspruch 11, wobei die Trägerschicht (4) auf die erste Scheibe (1) oder die zweite Scheibe (2) aufgeklebt wird oder zwischen eine erste Verbindungsschicht (6) und eine zweite Verbindungsschicht (7) eingelegt wird.

13. Verwendung einer mit einer funktionellen Beschichtung (5) oder funktionellen Einlagerungen versehenen thermoplastischen Trägerschicht (4) in der Zwischenschicht eines Verbundglases mit mindestens einer chemisch vorgespannten Scheibe nach einem der Ansprüche 1 bis 10.

## Claims

1. Composite glass with at least one chemically tempered pane, comprising at least a first pane (1) and a second pane (2), which are bonded to each other via an intermediate layer (3), wherein
- the first pane (1) is a chemically tempered glass pane with a thickness less than or equal to 2.1 mm,
- the intermediate layer (3) contains at least one thermoplastic bonding layer (6) and a thermoplastic carrier layer (4), and
- the carrier layer (4) has a functional coating (5) or functional inclusions, wherein the carrier layer (4) with the functional coating (5) or the functional inclusions is arranged in the intermediate layer (3), and wherein
(i) the carrier layer (4) has a functional coating (5), which is an IR reflecting or absorbing coating, a UV reflecting or absorbing coating, a coloring coating, a low emissivity coating, a heatable coating, a coating with antenna function, a splinter-binding coating, or a coating for shielding against electromagnetic radiation, or
(ii) the carrier layer (4) has functional inclusions with IR absorbing, UV absorbing, or coloring properties, preferably organic or inorganic ions, compounds, aggregates, molecules, crystals, pigments, or dyes.

2. Composite glass according to claim 1, alternative (i), wherein the functional coating (5) contains at least one electrically conductive layer, which preferably contains at least silver or a transparent conductive oxide and preferably has a thickness of 10 nm to 200 nm.

3. Composite glass according to one of claims 1 through 2, wherein the carrier layer (4) has a thickness of 5 µm to 1 mm, preferably of 5 µm to 500 µm, particularly preferably of 10 µm to 200 µm, most particularly preferably of 12 µm to 75 µm.

4. Composite glass according to one of claims 1 through 3, wherein the carrier layer (4) contains at least polyethylene terephthalate (PET), polyethylene (PE), or mixtures or copolymers or derivatives thereof.

5. Composite glass according to one of claims 1 through 4, wherein the bonding layer (6) contains at least polyvinyl butyral (PVB), ethylene vinyl acetate (EVA), polyurethane (PU), or mixtures or copolymers or derivatives thereof and has a thickness of 0.2 mm to 1 mm.

6. Composite glass according to one of claims 1 through 5, wherein the first pane (1) contains from 55 wt.-% to 72 wt.-% silicon oxide (SiO₂), from 5 wt.-% to 10 wt.-% aluminum oxide (Al₂O₃), from 10 wt.-% to 15 wt.-% sodium oxide (Na₂O), from 7 wt.-% to 12 wt.-% potassium oxide (K₂O), and from 6 wt.-% to 11 wt.-% magnesium oxide (MgO).

7. Composite glass according to one of claims 1 through 6, wherein the first pane (1) has a surface compressive stress greater than 100 MPa, preferably greater than 250 MPa, and particularly preferably greater than 350 MPa and a compressive stress depth greater than 40 µm, preferably greater than 100 µm, particularly preferably greater than 150 µm.

8. Composite glass according to one of claims 1 through 7, wherein the first pane (1) has a thickness of 0.3 mm to 2.1 mm, preferably of 0.5 to 1.5 mm, particularly preferably of 0.6 mm to 1.0 mm.

9. Composite glass according to one of claims 1 through 8, wherein the second pane (2) is a chemically tempered glass pane and has a thickness of 0.3 mm to 2.1 mm, preferably of 0.5 to 1.5 mm.

10. Composite glass according to one of claims 1 through 9, wherein the second pane is a non-tempered glass pane or plastic pane and has a thickness of 1.5 mm to 5 mm, preferably of 2 mm to 3 mm.

11. Method for producing a composite glass with at least one chemically tempered pane according to one of claims 1 through 10, wherein
(a) a first pane (1) made of glass is chemically tempered,
(b) a thermoplastic carrier layer (4) provided with at least one functional coating (5) or functional inclusions and a bonding layer (6) are arranged in a planar manner between the first pane (1) and a second pane (2), and
(c) the first pane (1) and the second pane (2) are bonded to each other by lamination, wherein at least the carrier layer (4) and the bonding layer (6) form an intermediate layer (3).

12. Method according to claim 11, wherein the carrier layer (4) is glued to the first pane (1) or the second pane (2) or is placed between a first bonding layer (6) and a second bonding layer (7).

13. Use of a thermoplastic carrier layer (4) provided with a functional coating (5) or functional inclusions in the intermediate layer of a composite glass with at least one chemically tempered pane according to one of claims 1 through 10.

## Revendications

1. Verre composite avec au moins une vitre trempée chimiquement, comprenant au moins une première vitre (1) et une deuxième vitre (2), qui sont liées l'une à l'autre par une couche intermédiaire (3), dans lequel
- la première vitre (1) est une vitre en verre trempé chimiquement d'une épaisseur inférieure ou égale à 2,1 mm,
- la couche intermédiaire (3) contient au moins une couche de liaison thermoplastique (6) et une couche de support thermoplastique (4), et
- la couche de support (4) comporte un revêtement fonctionnel (5) ou des inclusions fonctionnelles, dans lequel
la couche de support (4) avec le revêtement fonctionnel (5) ou les inclusions fonctionnelles est disposée dans la couche intermédiaire (3), et dans laquelle
i) la couche de support (4) comporte un revêtement fonctionnel (5), qui est un revêtement réfléchissant ou absorbant les IR, un revêtement réfléchissant ou absorbant les UV, un revêtement colorant, un revêtement à faible émissivité, un revêtement chauffant, un revêtement ayant une fonction d'antenne, un revêtement fixant les éclats ou un revêtement de protection contre les rayonnements électromagnétiques, ou
(ii) la couche de support (4) présente des inclusions fonctionnelles ayant des propriétés d'absorption des IR, des UV ou de coloration, de préférence des ions, composés, agrégats, molécules, cristaux, pigments ou colorants organiques ou inorganiques.

2. Verre composite selon la revendication 1, variante (i), dans lequel le revêtement fonctionnel (5) contient au moins une couche électriquement conductrice, qui contient de préférence au moins de l'argent ou un oxyde conducteur transparent et présente de préférence une épaisseur de 10 nm à 200 nm.

3. Verre composite selon l'une des revendications 1 à 2, dans lequel la couche de support (4) présente une épaisseur de 5 µm à 1 mm, de préférence de 5 µm à 500 µm particulièrement de 10 µm à 200 µm plus particulièrement de 12 µm à 75 µm

4. Verre composite selon l'une des revendications 1 à 3, dans lequel la couche de support (4) contient au moins du polyéthylène téréphtalate (PET), du polyéthylène (PE) ou des mélanges ou des copolymères ou des dérivés de ceux-ci.

5. Verre composite selon l'une des revendications 1 à 4, dans lequel la couche de liaison (6) contient au moins du polyvinylbutyral (PVB), de l'éthylène-acétate de vinyle (EVA), du polyuréthane (PU) ou des mélanges ou des copolymères ou des dérivés de ceux-ci et présente une épaisseur de 0,2 mm à 1 mm.

6. Verre composite selon l'une des revendications 1 à 5, dans lequel la première vitre (1) contient de 55 % en poids à 72 % en poids d'oxyde de silicium (SiO₂), de 5 % en poids à 10 % en poids d'oxyde d'aluminium (Al₂O₃), de 10 % en poids à 15 % en poids d'oxyde de sodium (Na₂O), de 7 % en poids à 12 % en poids d'oxyde de potassium (K₂O) et de 6 % en poids à 11 % en poids d'oxyde de magnésium (MgO).

7. Verre composite selon l'une des revendications 1 à 6, dans lequel la première vitre (1) présente une contrainte de compression de surface supérieure à 100 MPa, de préférence supérieure à 250 MPa, et de manière particulièrement préférée supérieure à 350 MPa, et une profondeur de contrainte de compression supérieure à 40 µm, de préférence supérieure à 100 µm, de manière particulièrement préférée supérieure à 150 µm.

8. Verre composite selon l'une des revendications 1 à 7, dans lequel la première vitre (1) a une épaisseur de 0,3 mm à 2,1 mm, de préférence de 0,5 à 1,5 mm, particulièrement préférablement de 0,6 mm à 1,0 mm.

9. Verre composite selon l'une des revendications 1 à 8, dans lequel la deuxième vitre (2) est une vitre en verre trempé chimiquement et a une épaisseur de 0,3 mm à 2,1 mm, de préférence de 0,5 à 1,5 mm.

10. Verre composite selon l'une des revendications 1 à 9, dans lequel la deuxième vitre est une vitre en verre non trempé ou une vitre en matière plastique et a une épaisseur de 1,5 mm à 5 mm, de préférence de 2 mm à 3 mm.

11. Procédé de fabrication d'un verre composite avec au moins une vitre trempée chimiquement selon l'une des revendications 1 à 10, dans lequel
a) une première vitre (1) en verre est trempée chimiquement,
b) une couche de support thermoplastique (4) pourvue d'au moins un revêtement fonctionnel (5) ou d'inclusions fonctionnelles et une couche de liaison (6) sont disposées de manière plane entre la première vitre (1) et une deuxième vitre (2), et
(c) la première vitre (1) et la deuxième vitre (2) sont collées l'une à l'autre par laminage, dans lequel au moins la couche de support (4) et la couche de liaison (6) forment une couche intermédiaire (3).

12. Procédé selon la revendication 11, dans lequel la couche de support (4) est collée à la première vitre (1) ou à la deuxième vitre (2) ou est placée entre une première couche de liaison (6) et une deuxième couche de liaison (7).

13. Utilisation d'une couche de support thermoplastique (4) pourvue d'un revêtement fonctionnel (5) ou d'inclusions fonctionnelles dans la couche intermédiaire d'un verre composite avec au moins une vitre trempée chimiquement selon l'une des revendications 1 à 10.
